# EUROPEAN PATENT APPLICATION

(11) **EP 4 582 866 A1**
(43) Date of publication of application: **09.07.2025**
(21) Application number: 23876736.2
(22) Date of filing: 11.10.2023
(51) Int. Cl.: G03B 15/06, G03B 15/02, F21V 7/18

(54) **INFLATABLE CYLINDRICAL LIGHT**

(30) Priority: 12.10.2022 CN 202222689816 U; 12.10.2022 CN 202222693277 U
(71) Applicant: Yingyou Equipment Co., Ltd., Shenzhen, Guangdong 518000 (CN)
(72) Inventor: ZENG, Weiling, Shenzhen, Guangdong 518000 (CN)
(74) Representative: Studio Torta S.p.A.
(86) International application number: PCT/CN2023/124037
(87) International publication number: WO 2024/078535

(57) **Abstract**

An inflatable cylindrical light (100), comprising a light body (10), an LED light source (20), and a fixing sheet (30). An inflation cavity (11) is provided inside the light body (10). An inflation port (12) communicated with the inflation cavity (11) is provided on the light body (10). The light body (10) comprises a base fabric (13) and a light diffusion fabric (14). The LED light source (20) is arranged inside the light body (10). A light-emitting surface of the LED light source (20) faces the light diffusion fabric (14). The light body (10) can protect the LED light source (20), to prevent damage to the LED light source (20) and ensure that the LED light source (20) can function normally, thereby ensuring good user experience.

## Description

### CROSS-REFERENCE TO RELATED APPLICATIONS

This application claims the priority to a Chinese patent application No. 202222689816.2, titled "inflatable cylindrical light", filed on October 12, 2022, and a Chinese patent application No. 202222693277.X, titled "inflatable cylindrical light", filed on October 12, 2022, the entire contents of which are incorporated herein by reference.

### TECHNICAL FIELD

The present application relates to the technical field of photography and videography, and particularly to an inflatable cylindrical light.

### BACKGROUND

With the development of the information age, people's requirement for photography and videography is increasing. During the existing photography and videography processes, various soft light devices are often required. As a new type of soft light device, the inflatable cylindrical light is equipped with an airbag, such that the light emitted by the LED light source can to be scattered through the air in the airbag and the soft light cloth on the outer side of the airbag, with a better soft light effect, and it only needs to be inflated before use, and the operation is relatively convenient. Therefore, due to its good soft light performance, portability, simple operation and other characteristics, the inflatable cylindrical light in the market become more and more popular.

The airbags in the existing inflatable cylindrical lights are all made of flexible materials, and the LED light sources in the inflatable cylindrical lights are pasted and fixed on the outer side of the airbags, which cannot provide protection for the LED light sources. Therefore, during use or storage, the LED light sources are easily damaged due to collisions, resulting in abnormal work of the inflatable cylindrical light, which seriously affects the user experience.

### SUMMARY

The purpose of the present application is to solve the technical problem that in the existing inflatable cylindrical lights, the LED light source is easily damaged by collision, resulting in abnormal work of the inflatable cylindrical light, which seriously affects the user experience.

To solve the above technical problems, the present application provides an inflatable cylindrical light, which includes:
a light body, provided with a sealed inflatable cavity inside, wherein the light body is provided with an inflation opening in communication with the inflatable cavity, and the light body comprises a soft light cloth and an opaque base cloth; and
a Light Emitting Diode (LED) light source, provided inside the light body;
where a light-emitting surface of the LED light source faces the soft light cloth, and the light emitted by the LED light source is emitted from the soft light cloth through the inflatable cavity.

In one embodiment, the base cloth and the soft light cloth are connected to enclose a cylindrical structure with openings at two ends and a hollow interior;
where the light body further includes two side cloths, respectively provided at the openings at two ends of the cylindrical structure to enclose the inflatable cavity of the light body.

In one embodiment, the inflatable cylindrical light further includes a transparent fixing sheet, and the fixing sheet is attached to a surface of the LED light source to fix the LED light source inside the light body.

In one embodiment, the inflatable cylindrical light further includes a connection plate, a first connection wire and a second connection wire;
where the connection plate is fixed on an inner wall of the light body;
a plurality of LED light sources are provided at intervals on an inner surface of the base cloth, and each LED light source is connected to the connection plate through the first connection wire; and an end of the second connection wire is connected to the connection plate, and another end of the second connection wire is connected to a power supply.

In one embodiment, the inflatable cylindrical light further includes a power port, provided on the side cloth, wherein the another end of the second connection wire is connected to the power supply through the power port.

In one embodiment, the inflatable cylindrical light further includes a flexible member, provided on a surface of the connection plate to enable the connection plate to bend flexibly.

In one embodiment, the inflatable cylindrical light further includes a Velcro and/or a magnet;
where the Velcro is provided on an outer surface of the base cloth, and the magnet is fixed on an inner wall of the base cloth.

In one embodiment, the soft light cloth and the base cloth are of a groove shaped structure; an groove opening of the soft light cloth is opposite to an groove opening of the base cloth; and a periphery of the groove opening of the soft light cloth is connected to a periphery of the groove opening of the base cloth to enclose the inflatable cavity of the light body.

In one embodiment, the light body is of a columnar structure, a ring-shaped structure, a spherical structure or an ellipsoidal structure.

In one embodiment, the inflatable cylindrical light further includes an air nozzle, provided at the inflation opening to open or close the inflation opening.

In one embodiment, the inflatable cylindrical light further includes a light-transmitting sheet;
where the light-transmitting sheet and the soft light cloth are connected to form the inflatable cavity;
the light-transmitting sheet corresponds to a light-transmitting region of the light body, and the soft light cloth corresponds to a soft light region of the light body; and
the LED light source is a light bead provided on the base cloth;
where the inflatable cylindrical light further comprises a transition connector, and a surface of the base cloth is detachably provided on a surface of the light-transmitting sheet through the transition connector.

In one embodiment, a plurality of light beads are provided on the base cloth; and
the base cloth covers the light-transmitting region of the light body through the transition connector.

In one embodiment, the transition connector is a Velcro provided on an outer surface of the light body; and
the base cloth of the LED light source is adhered to an outer surface of the light body through the Velcro.

In one embodiment, the light body further includes two side cloths, respectively provided at two ends of an overall structure formed by connecting the light-transmitting sheet and the soft light cloth.

In one embodiment, a plurality of LED light sources are provided, and each LED light source is detachably provided on the light body through its own base cloth and the transition connector.

In one embodiment, the inflatable cylindrical light further includes an air nozzle, provided at the inflation opening to open or close the inflation opening;
where the inflatable cylindrical light further includes an annular rubber pad, provided on an inner surface of the light body and surrounding the air nozzle.

In one embodiment, the light body is of a rectangular structure; and the LED light source is provided on an outer side surface of the light body, and the inflation opening is provided at an end of the light body.

In one embodiment, the inflatable cylindrical light further includes a Velcro and a light-transmitting film;
where the Velcro is provided on the outer side surface of the light body, and the Velcro is provided at a periphery of the LED light source and a periphery of the light-transmitting film to fix the LED light source and the light-transmitting film on the outer side surface of the light body; and the light-transmitting film is provided between the LED light source and the light body

It can be known from the above technical solutions that the beneficial effects of the present application are as follows: in the inflatable cylindrical light of the present application, the LED light source is provided inside the light body, and the light body can protect the LED light source from being damaged, ensuring that the LED light source can be used normally, and ensuring a better user experience.

### BRIEF DESCRIPTION OF THE DRAWINGS

FIG. 1 is a structural schematic diagram of the first embodiment of the inflatable cylindrical light of the present application.
FIG. 2 is an exploded view of the inflatable cylindrical light shown in FIG. 1.
FIG. 3 is a schematic diagram of the internal structure of the inflatable cylindrical light shown in FIG. 1.
FIG. 4 is another schematic diagram of the internal structure of the inflatable cylindrical light shown in FIG. 1.
FIG. 5 is a cross-sectional view of the inflatable cylindrical light shown in FIG. 1.
FIG. 6 is an enlarged view at A in FIG. 5.
FIG. 7 is a structural schematic diagram of the second embodiment of the inflatable cylindrical light of the present application.
FIG. 8 is an exploded view of the inflatable cylindrical light shown in FIG. 7.
FIG. 9 is a schematic diagram of the internal structure of the inflatable cylindrical light shown in FIG. 7.
FIG. 10 is a cross-sectional view along A-A in FIG. 9.
FIG. 11 is a structural schematic diagram of the third embodiment of the inflatable cylindrical light of the present application.
FIG. 12 is an exploded view of the inflatable cylindrical light shown in FIG. 11.
FIG. 13 is a schematic diagram of the internal structure of the inflatable cylindrical light shown in FIG. 11.
FIG. 14 is a cross-sectional view along B-B in FIG. 13.
FIG. 15 is a structural schematic diagram of one embodiment of the inflatable cylindrical light of the present application.
FIG. 16 is a cross-sectional view of the inflatable cylindrical light shown in FIG. 15.
FIG. 17 is an exploded view of the inflatable cylindrical light shown in FIG. 15.
FIG. 18 is a structural schematic diagram of another embodiment of the inflatable cylindrical light of the present application.
FIG. 19 is an exploded view of the inflatable cylindrical light shown in FIG. 18.
FIG. 20 is an exploded view of the inflatable cylindrical light shown in FIG. 18.

Reference number: 100, inflatable cylindrical light; 10, light body; 11, inflatable cavity; 12, inflation opening; 13, base cloth; 14, soft light cloth; 15, first side cloth; 16, second side cloth; 171, nut fixing seat; 172, nut; 173, port fixing seat; 174, power port; 20, LED light source; 30, fixing sheet; 40, connection plate; 50, double-sided adhesive; 61, first connection wire; 62, second connection wire; 70, flexible member; 81, gasket; 82, air nozzle; 821, air nozzle body; 822, knob plug; 83, rubber pad; 84, Velcro; 85, USB interface piece; 86, magnet; 87, assembly sheet; 88, connection sheet; 1113, light-transmitting sheet; 1122, light bead; 1130, Velcro; 1160, light-transmitting film.

### DETAILED DESCRIPTION OF THE EMBODIMENTS

Embodiments embodying the features and advantages of the present application will be described in detail in the following description. It is to be understood that the present application is capable of various variations in different embodiments, none of which is outside the scope of the present application, and that the descriptions and drawings therein are intended to be illustrative in nature and are not intended to limit the present application.

In the description of the present application, it is to be understood that in the embodiments shown in the accompanying drawings, indications of orientation or positional relationships (such as up, down, left, right, forward and backward, etc.) are provided solely for the purpose of facilitating and simplifying the description of the present application, rather than indicating or implying that the device or element referred to must have a particular orientation, be constructed and operated in a particular orientation. These descriptions are appropriate when these elements are in the positions shown in the accompanying drawings. If the description of the position of these elements is changed, the indications of these orientations are changed accordingly.

Furthermore, the terms "first" and "second" are used only for descriptive purposes and are not to be understood as indicating or implying relative importance or implicitly specifying the number of technical features indicated. Thus, a feature defined with "first" and "second" may expressly or implicitly include one or more of the described features. In the description of the present application, "more than one" means two or more, unless otherwise expressly and specifically limited.

The following will elaborate on the structure of the photography and video light through several embodiments with reference to the accompanying drawings.

The First Embodiment of the inflatable cylindrical light

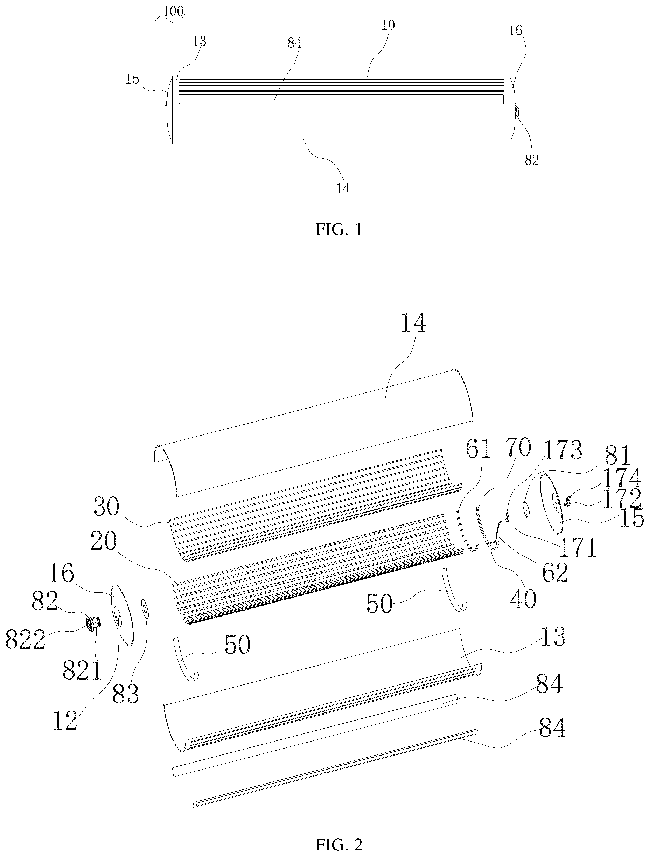

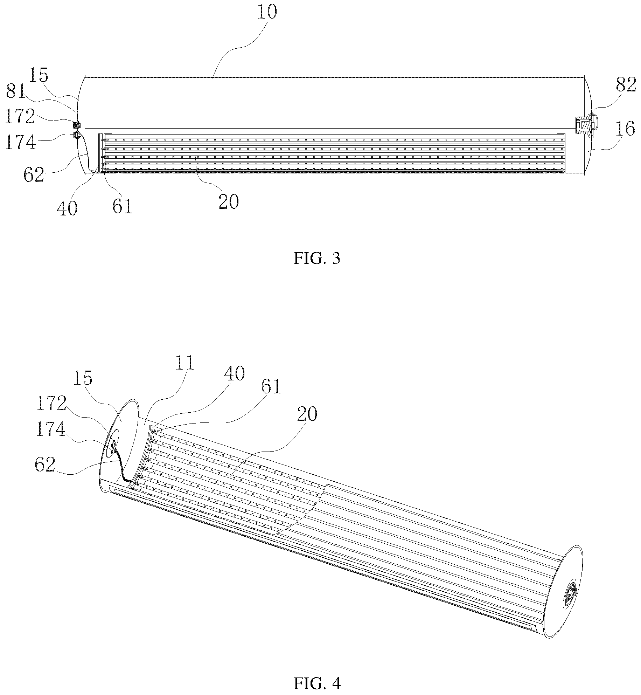

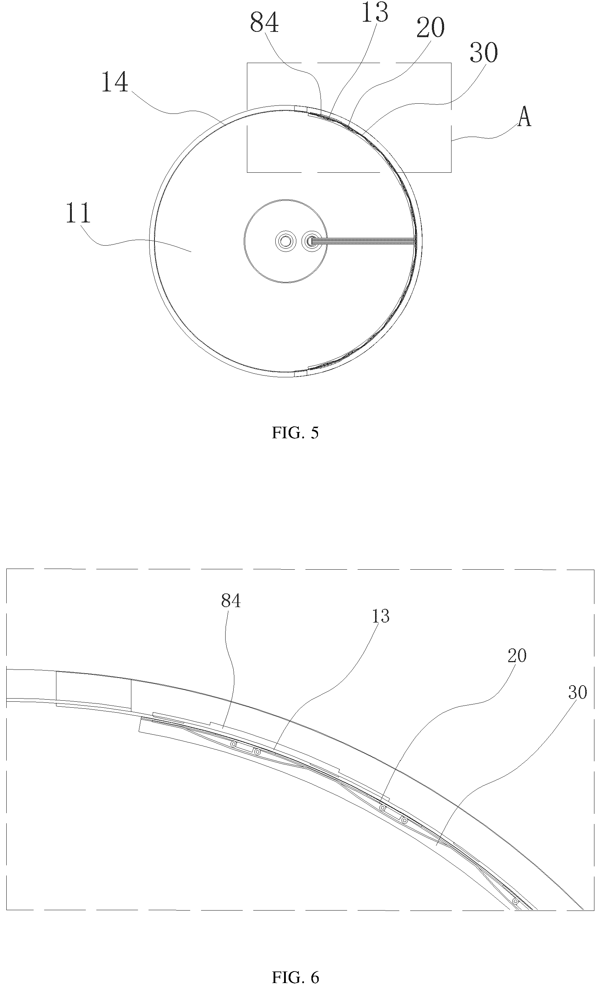

Referring to FIGS. 1 to 6, an embodiment of the present application provides an inflatable cylindrical light 100, which includes a light body 10, a Light Emitting Diode (LED) light source 20, and a fixing sheet 30. The light body 10 is provided with an inflatable cavity 11 inside, and an inflation opening 12 in communication with the inflatable cavity 11 is opened on the light body 10. The light body 10 includes a base cloth 13 and a soft light cloth 14. The LED light source 20 is provided inside the light body 10, and the light-emitting surface of the LED light source 20 faces the soft light cloth 14. The fixing sheet 30 is transparent and is attached to the surface of the LED light source 20 to fix the LED light source 20 inside the light body 10.

In this embodiment, the base cloth 13 is opaque. The soft light cloth 14 is transparent and can make the transmitted light softer. Both the base cloth 13 and the soft light cloth 14 are strip-shaped. The base cloth 13 and the soft light cloth 14 can form a cylindrical structure with openings at both ends and a hollow interior through ultrasonic pressing technology. The light body 10 also includes two side cloths, namely a first side cloth 15 and a second side cloth 16. The first side cloth 15 and the second side cloth 16 are respectively connected to the openings at both ends of the cylindrical structure by ultrasonic pressing technology to enclose the inflatable cavity 11. After being inflated, the inflatable cavity 11 takes on a cylindrical shape.

In other examples of this embodiment, the base cloth 13 and the soft light cloth 14 can also be connected by other means such as stitching, and the side cloths and the cylindrical structure formed by the base cloth 13 and the soft light cloth 14 can also be connected by other means such as stitching.

In addition, in other examples of this embodiment, the base cloth 13 and the soft light cloth 14 can also enclose structures of other shapes, such as a square column structure, a triangular column structure, or a pentagonal column structure. Correspondingly, the shapes of the first side cloth 15 and the second side cloth 16 can be square, triangular, pentagonal, etc.

For the light body 10 of this embodiment, the base cloth 13, the soft light cloth 14, and the side cloths are connected to form the inflatable cavity 11 of the light body 10. The air can be inflated into the inflatable cavity 11 of the light body 10 through the inflation opening 12, making the light body 10 to expand into a cylindrical structure. After the air in the inflatable cavity 11 of the light body 10 is discharged, the light body 10 can be shrunk for easy storage of the inflatable cylindrical light 100.

There are a plurality of LED light sources 20 in this embodiment, and they are provided at intervals on the inner wall of the base cloth 13. The LED light sources 20 are flexible. The length direction of the LED light sources 20 is consistent with that of the base cloth 13. The plurality of LED light sources 20 can be evenly provided at intervals along the width direction of the base cloth 13, and two ends of the LED light sources 20 can be adhered to the inner surface of the base cloth 13 with double-sided adhesive 50.

In this embodiment, the inflatable cylindrical light 100 also includes a connection plate 40. The connection plate 40 is fixed to the inner surface of the base cloth 13 with double-sided adhesive 50 and is provided at an end of the LED light sources 20. The inflatable cylindrical light 100 of this embodiment further includes first connection wires 61 and a second connection wire 62. There are a plurality of first connection wires 61, which are connected to the plurality of LED light sources 20 one-to-one correspondingly. Each LED light source 20 is connected to the connection plate 40 through one first connection wire 61. An end of the second connection wire 62 is connected to the connection plate 40, and another end of the second connection wire 62 is connected to a power supply.

The inflatable cylindrical light 100 also includes a flexible member 70. The flexible member 70 can be made of flexible materials such as silicone or rubber. It is provided on the surface of the connection plate 40 to enhance the flexibility of the connection plate 40, such that the connection plate 40 can bent flexibly. When the air in the inflatable cavity 11 of the light body 10 is discharged and the inflatable cylindrical light 100 is stored, the flexible member 70 can make the bent part of the connection plate 40 to be an arc-shaped transition, to avoid the folding of the connection plate 40, effectively preventing the breakage of the connection plate 40, and ensuring the structural stability of the connection plate 40.

In addition, in this embodiment, the LED light source 20 is provided with a pad that coincides with the pad of the connection plate 40. During soldering, the solder can penetrate to make the connection between the pads stable and uneasily loosen, crack, or have a false soldering, ensuring the connection strength of the overall structure.

The first side cloth 15 in this embodiment is provided close to the connection plate 40. The inflatable cylindrical light 100 also includes a power port 174 and a port fixing seat 173. The port fixing seat 173 is provided on the inner surface of the first side cloth 15, and the power port 174 passes through the first side cloth 15 and is fixed in the port fixing seat 173. The end of the second connection wire 62 is connected to an external power supply through the power port 174 to energize the inflatable cylindrical light 100.

In addition, the first side cloth 15 is also provided with a nut fixing seat 171 and a nut 172. The nut fixing seat 171 is provided on the inner surface of the first side cloth 15, and the nut 172 passes through the first side cloth 15 and is fixed in the nut fixing seat 171. The port fixing seat 173 and the nut fixing seat 171 are spaced apart, and the nut 172 is spaced from the power port 174.

The inflatable cylindrical light 100 of this embodiment also includes a gasket 81. The gasket 81 is provided between the port fixing seat 173, the nut fixing seat 171, and the inner surface of the first side cloth 15 to protect the first side cloth 15. The gasket 81 can be a flexible member 70 such as thermoplastic polyurethane elastomer, rubber, or silicone to enhance the cushioning between components.

Further, the fixing sheet 30 of the inflatable cylindrical light 100 is transparent and can be made of thermoplastic polyurethane rubber. The fixing sheet 30 is attached to the surface of the LED light source 20. Through ultrasonic pressing technology, the fixing sheet 30 is pressed onto the inner surface of the base cloth 13, such that two stripe lines are formed on two sides of each LED light source 20, so that each LED light source 20 is fixed between two stripe lines, thereby stably fixing the LED light source 20 on the inner surface of the base cloth 13.

In this embodiment, the LED light source 20 is provided on the inner surface of the light body 10, and the transparent fixing sheet 30 is attached to the surface of the LED light source 20, such that the LED light source 20 can be stably fixed inside the light body 10. The LED light source 20 is provided inside the light body 10. The fixing sheet 30 can strengthen the stability of the connection of the LED light source 20 and the light body 10. The light body 10 can protect the LED light source 20, avoiding the LED light source 20 from being damaged, ensuring the normal use of the LED light source 20, and ensuring a better user experience.

Further, the inflatable cylindrical light 100 of this embodiment also includes an air nozzle 82. The air nozzle 82 is provided at the inflation opening 12 to open or close the inflation opening 12. The inflation opening 12 is provided on the second side cloth 16.

In this embodiment, the air nozzle 82 includes an air nozzle body 821 and a knob plug 822 provided on the air nozzle body 821. The air nozzle body 821 has openings at two ends and a hollow interior, and passes through and is provided in the inflation opening 12 of the second side cloth 16, and its interior is in communication with the inflatable cavity 11 of the light body 10. The knob plug 822 is provided at an opening at an outer end of the air nozzle body 821 and can rotate relative to the air nozzle body 821 to be inserted into the opening of the air nozzle body 821 to close the inflation opening 12 or be detached from the opening of the air nozzle body 821 to open the inflation opening 12.

The inflation opening 12 can be opened through the knob plug 822. Different gases can be inflated into the inflatable cavity 11 of the light body 10 through the inflation opening 12 to meet different lighting requirements of the inflatable cylindrical light 100, expanding the application scope of the inflatable cylindrical light 100.

In this embodiment, the inflatable cylindrical light 100 also includes a rubber pad 83. The rubber pad 83 is provided on the inner surface of the second side cloth 16 and surrounds the air nozzle body 821. The rubber pad 83 can be made of flexible materials such as thermoplastic polyurethane rubber or silicone to form a protection on the inner surface of the second side cloth 16.

In addition, the inflatable cylindrical light 100 of this embodiment also includes a Velcro 84. The Velcro 84 is provided on the outer surface of the light body 10 and can be adhered to different external devices, such as holding parts or fixing parts, to enhance the practical performance of the inflatable cylindrical light 100.

When assembling the inflatable cylindrical light 100 of this embodiment, first, the Velcro 84 is ultrasonically attached to the outer surface of the base cloth 13. Then, the base cloth 13 is unfolded, and the position marks of the double-sided adhesive 50 are made on the inner surface of the base cloth 13. After that, the base cloth 13 is laid flat on a smooth table. The double-sided adhesive 50 is attached at the marked positions, and then the LED light source 20 and the connection plate 40 are adhered to the inner surface of the base cloth 13 with the double-sided adhesive 50. Then, each LED light source 20 is connected to the connection plate 40 through one first connection wire 61. The plurality of LED light sources 20 are connected in parallel with each other, and then an end of the second connection wire 62 is connected to the connection plate 40.

After the assembly of the LED light source 20, the connection plate 40, the first connection wire 61, and the second connection wire 62 is completed, the fixing sheet 30 is covered on the LED light source 20, and the fixing sheet 30 is pressed onto the base cloth 13 through ultrasonic pressing technology, such that two stripe lines are formed on two sides of each LED light source 20, so that each LED light source 20 is fixed between two stripe lines. Then, the base cloth 13 and the soft light cloth 14 are ultrasonically pressed to enclose a cylindrical structure. The power port 174 is ultrasonically pressed onto the first side cloth 15, and the air nozzle 82 is ultrasonically pressed at the inflation opening 12 of the second side cloth 16. Then, another end of the second connection wire 62 is led out to the power port 174 and connected to the power port 174. Finally, the first side cloth 15 and the second side cloth 16 are respectively ultrasonically pressed at the openings at two ends of the cylindrical structure, and the excess cloth is trimmed, thus the production and assembly of the inflatable cylindrical light 100 is completed.

The Second Embodiment of the inflatable cylindrical light

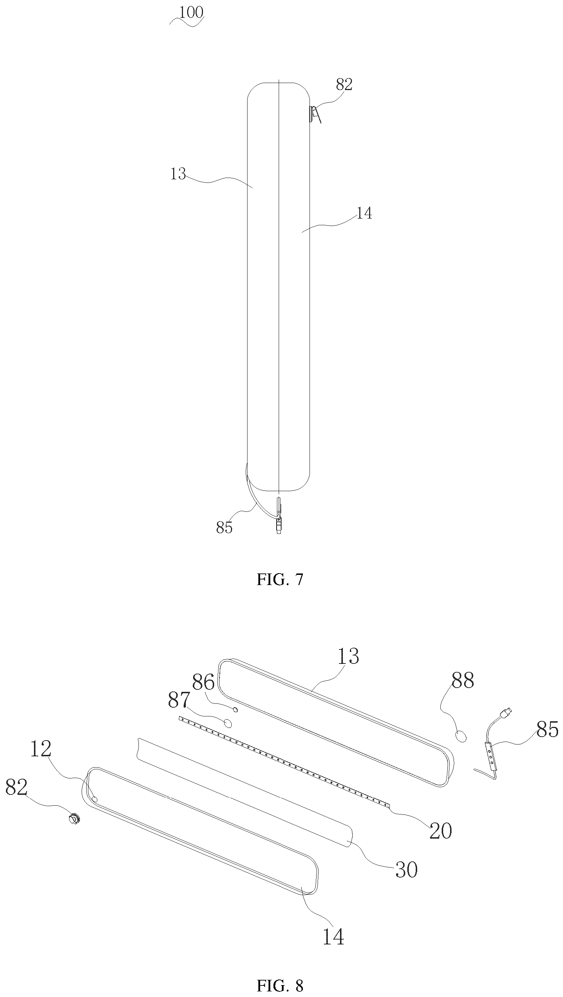

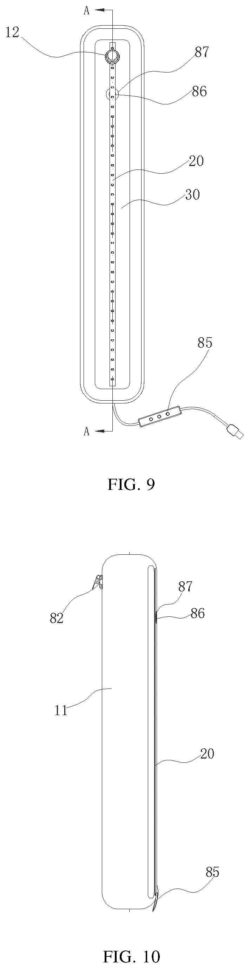

Referring to FIGS. 7 to 10, the structure of the inflatable cylindrical light 100 in the second embodiment is generally the same as that in the first embodiment. The inflatable cylindrical light 100 in this embodiment also includes a light body 10, an LED light source 20, and a fixing sheet 30. The light body 10 is provided with an inflatable cavity 11 inside, and an inflation opening 12 in communication with the inflatable cavity 11 is opened on the light body 10. The light body 10 includes a base cloth 13 and a soft light cloth 14. The LED light source 20 is provided on the inner wall of the light body 10, and the light-emitting surface of the LED light source 20 faces the soft light cloth 14. The fixing sheet 30 is transparent and is attached to the surface of the LED light source 20 to fix the LED light source 20 inside the light body 10.

The difference between the inflatable cylindrical light 100 in the second embodiment and that in the first embodiment is that in this embodiment, both the soft light cloth 14 and the base cloth 13 are of a groove shaped structure. The groove opening of the soft light cloth 14 is opposite to that of the base cloth 13, and a periphery of the groove opening of the soft light cloth 14 is connected to a periphery of the groove opening of the base cloth 13 to enclose the inflatable cavity 11 of the light body 10.

In this embodiment, the cross-sections of the soft light cloth 14 and the base cloth 13 are both semi-circular. The light body 10 formed by connecting the soft light cloth 14 and the base cloth 13 is a columnar structure with a circular cross-section. The LED light source 20 in this embodiment is fixed on the inner surface of the base cloth 13. The LED light source 20 is strip-shaped and can be a flexible LED light source 20.

The LED light source 20 can be adhered to the inner surface of the base cloth 13 with double-sided adhesive 50. The fixing sheet 30 is attached to the surface of the LED light source 20, and the fixing sheet 30 is pressed onto the surface of the base cloth 13 through ultrasonic pressing technology, so that the LED light source 20 is stably fixed inside the light body 10. The fixing sheet 30 can be made of thermoplastic polyurethane rubber.

The inflatable cylindrical light 100 of this embodiment also includes a USB interface piece 85. Two ends of the USB interface piece 85 are a wiring end and an interface end respectively. The USB interface piece 85 passes through and is provided in the base cloth 13 and is fixed on the inner surface of the base cloth 13 by the connection sheet 88 made of rubber or silicone. The connection sheet 88 is connected to the inner surface of the base cloth 13 through ultrasonic pressing technology.

The wiring end of the USB interface piece 85 is provided inside the light body 10 and is connected to the LED light source 20. The interface end of the USB interface piece 85 is provided outside the light body 10 and is used to connect to an external power supply or an external power supply device to energize the inflatable cylindrical light 100.

The soft light cloth 14 in this embodiment is transparent and is provided with an inflation opening 12, which is provided close to an end of the soft light cloth 14. In this embodiment, the air nozzle 82 includes an air nozzle body 821 and a knob plug 822 provided on the air nozzle body 821. The air nozzle body 821 has openings at two ends and a hollow interior, and passes through and is provided in the inflation opening 12 of the second side cloth 16, and its interior is in communication with the inflatable cavity 11 of the light body 10. The knob plug 822 is provided at an opening at an outer end of the air nozzle body 821 and can rotate relative to the air nozzle body 821 to be inserted into the opening of the air nozzle body 821 to close the inflation opening 12 or be detached from the opening of the air nozzle body 821 to open the inflation opening 12.

The inflation opening 12 can be opened through the knob plug 822. Different gases can be inflated into the inflatable cavity 11 of the light body 10 through the inflation opening 12 to meet different lighting requirements of the inflatable cylindrical light 100, expanding the application scope of the inflatable cylindrical light 100.

In addition, the inflatable cylindrical light 100 of this embodiment also includes a magnet 86. The magnet 86 is provided on the inner surface of the light body 10 and is fixed on the inner surface of the light body 10 by an assembly sheet 87 made of rubber or silicone. The assembly sheet 87 is transparent. Through the magnet 86, the inflatable cylindrical light 100 can be magnetically fixed to different external devices, such as holding parts or fixing parts, to enhance the practical performance of the inflatable cylindrical light 100.

When assembling the inflatable cylindrical light 100 of this embodiment, the magnet 86 can first be fixed on the inner surface of the base cloth 13 through the assembly sheet 87. Then, the LED light source 20 is adhered to the inner surface of the base cloth 13, and the LED light source 20 is provided above the magnet 86. The USB interface piece 85 is connected to the LED light source 20, the fixing sheet 30 is covered on the LED light source 20, and the fixing sheet 30 is pressed onto the base cloth 13 through ultrasonic pressing technology. The air nozzle 82 is provided at the inflation opening 12 of the soft light cloth 14 through ultrasonic pressing technology, and then the periphery of the groove opening of the soft light cloth 14 is connected with the periphery of the groove opening of the base cloth 13 through ultrasonic pressing technology, thus the production of the inflatable cylindrical light 100 is completed.

After the production of the inflatable cylindrical light 100 is completed, during use, different gases can be inflated into the inflatable cavity 11 through the air nozzle 82 to make the light body 10 expand into a long strip columnar structure. Different gases can meet different lighting requirements of the inflatable cylindrical light 100, expanding the application scope of the inflatable cylindrical light 100. After the inflatable cylindrical light 100 is used, the air in the inflatable cavity 11 can be discharged through the air nozzle 82 to store the inflatable cylindrical light 100.

In addition, besides the long strip columnar light body 10 shown in this embodiment, in other examples of this embodiment, the light body 10 can also be in a spherical or ellipsoidal structure after being inflated and expanded to meet the usage requirements of different environments.

The Third Embodiment of the inflatable cylindrical light

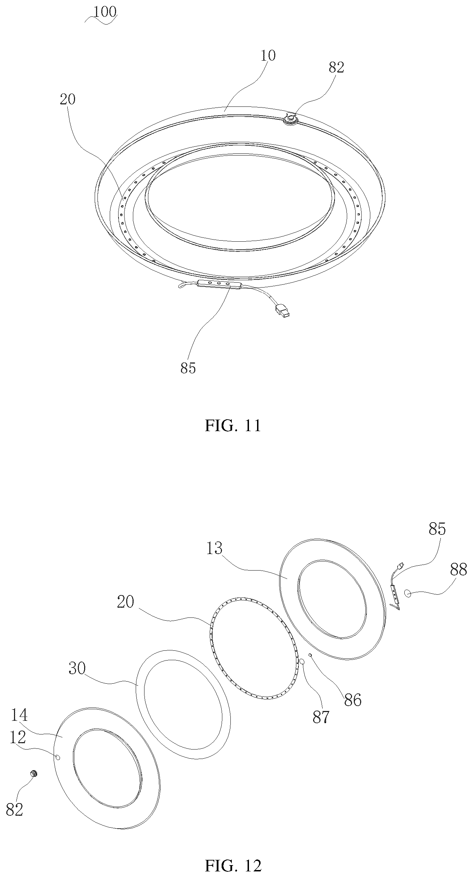

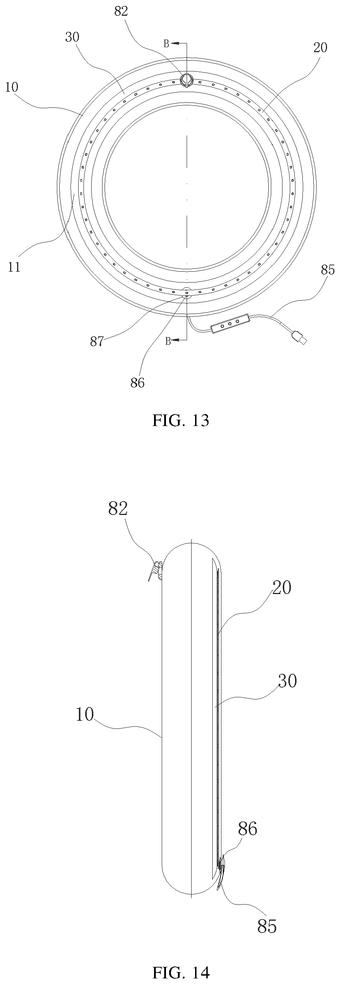

Referring to FIGS. 11 to 14, the structure of the inflatable cylindrical light 100 in the third embodiment is generally the same as that in the first embodiment. The inflatable cylindrical light 100 in this embodiment also includes a light body 10, an LED light source 20, and a fixing sheet 30. The light body 10 is provided with an inflatable cavity 11 inside, and an inflation opening 12 in communication with the inflatable cavity 11 is opened on the light body 10. The light body 10 includes a base cloth 13 and a soft light cloth 14. The LED light source 20 is provided on the inner wall of the base cloth 13, and the light-emitting surface of the LED light source 20 faces the soft light cloth 14. The fixing sheet 30 is transparent and is attached to the surface of the LED light source 20 to fix the LED light source 20 inside the light body 10.

The difference between the inflatable cylindrical light 100 in the third embodiment and that in the first embodiment is that in this embodiment, both the soft light cloth 14 and the base cloth 13 are of a groove shaped structure. A groove opening of the soft light cloth 14 is opposite to that of the base cloth 13, and a periphery of the groove opening of the soft light cloth 14 is connected to a periphery of the groove opening of the base cloth 13 to enclose the inflatable cavity 11 of the light body 10.

In this embodiment, both the soft light cloth 14 and the base cloth 13 are annular. The light body 10 formed by connecting the soft light cloth 14 and the base cloth 13 is an annular structure. The LED light source 20 in this embodiment is fixed on the inner surface of the base cloth 13. The LED light source 20 is annular and can be a flexible LED light source 20.

The LED light source 20 can be adhered to the inner surface of the base cloth 13 with double-sided adhesive 50, and the fixing sheet 30 is attached to the surface of the LED light source 20. The fixing sheet 30 is annular. The fixing sheet 30 is pressed onto the surface of the base cloth 13 through ultrasonic pressing technology, so that the LED light source 20 is stably fixed inside the light body 10. The fixing sheet 30 in this embodiment can be made of thermoplastic polyurethane rubber.

The inflatable cylindrical light 100 of this embodiment also includes a USB interface piece 85. Two ends of the USB interface piece 85 are a wiring end and an interface end respectively. The USB interface piece 85 passes through and is provided in the base cloth 13 and is fixed on the inner surface of the base cloth 13 by a connection sheet 88 made of rubber or silicone. The connection sheet 88 is connected to the inner surface of the base cloth 13 through ultrasonic pressing technology.

The wiring end of the USB interface piece 85 is provided inside the light body 10 and is connected to the LED light source 20. The interface end is provided outside the light body 10 and is used to connect to an external power supply or an external power supply device to energize the inflatable cylindrical light 100.

The soft light cloth 14 in this embodiment is transparent and is provided with an inflation opening 12, which is provided close to an end of the soft light cloth 14. In this embodiment, the air nozzle 82 includes an air nozzle body 821 and a knob plug 822 provided on the air nozzle body 821. The air nozzle body 821 has openings at two ends and a hollow interior, and passes through and is provided in the inflation opening 12 of the second side cloth 16, and its interior is in communication with the inflatable cavity 11 of the light body 10. The knob plug 822 is provided at an opening at an outer end of the air nozzle body 821 and can rotate relative to the air nozzle body 821 to be inserted into the opening of the air nozzle body 821 to close the inflation opening 12 or be detached from the opening of the air nozzle body 821 to open the inflation opening 12.

The inflation opening 12 can be opened through the knob plug 822. Different gases can be inflated into the inflatable cavity 11 of the light body 10 through the inflation opening 12 to meet different lighting requirements of the inflatable cylindrical light 100, expanding the application scope of the inflatable cylindrical light 100.

In addition, the inflatable cylindrical light 100 of this embodiment also includes a magnet 86. The magnet 86 is provided on the inner surface of the light body 10 and is fixed on the inner surface of the light body 10 by an assembly sheet 87 made of rubber or silicone. The assembly sheet 87 is transparent. Through the magnet 86, the inflatable cylindrical light 100 can be magnetically fixed to different external devices, such as holding parts or fixing parts, to enhance the practical performance of the inflatable cylindrical light 100.

When assembling the inflatable cylindrical light 100 of this embodiment, the magnet 86 can first be fixed on the inner surface of the base cloth 13 through the assembly sheet 87. Then, the LED light source 20 is adhered to the inner surface of the base cloth 13, and the LED light source 20 is provided above the magnet 86. The USB interface piece 85 is connected to the LED light source 20, the fixing sheet 30 is covered on the LED light source 20, and the fixing sheet 30 is pressed onto the base cloth 13 through ultrasonic pressing technology. The air nozzle 82 is provided at the inflation opening 12 of the soft light cloth 14 through ultrasonic pressing technology, and then the periphery of the groove opening of the soft light cloth 14 is connected with the periphery of the groove opening of the base cloth 13 through ultrasonic pressing technology, thus the production of the inflatable cylindrical light 100 is completed.

After the production of the inflatable cylindrical light 100 is completed, during use, different gases can be inflated into the inflatable cavity 11 through the air nozzle 82 to make the light body 10 expand into an annular structure. Different gases can meet different lighting requirements of the inflatable cylindrical light 100, expanding the application scope of the inflatable cylindrical light 100. After the inflatable cylindrical light 100 is used, the air in the inflatable cavity 11 can be discharged through the air nozzle 82 to store of the inflatable cylindrical light 100.

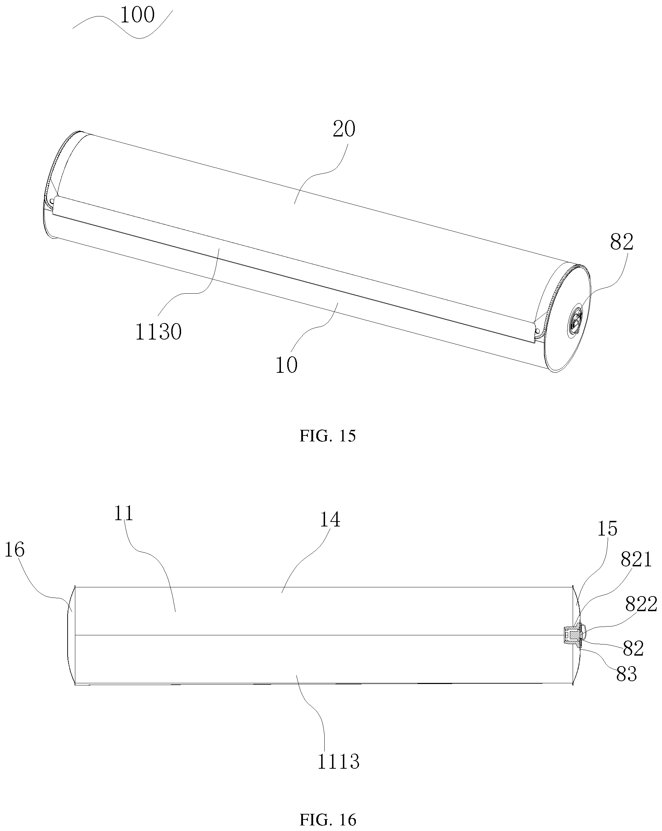

Referring to FIGS. 15 to 17, an embodiment of the present application provides an inflatable cylindrical light 100, which includes a light body 10, a light-transmitting sheet 1113, a transition connector, and an LED light source 20. The light-transmitting sheet 1113 and the soft light cloth 14 are connected to form a cylindrical structure with openings at two ends and a hollow interior. The light-transmitting sheet 1113 corresponds to a light-transmitting region of the light body 10, and the soft light cloth 14 corresponds to a soft light region of the light body 10. The LED light source 20 is a light bead 1122 provided on the base cloth 13. The inflatable cylindrical light 100 also includes a transition connector, and the surface of the base cloth 13 is detachably provided on the surface of the light-transmitting sheet 1113 through the transition connector.

The LED light source 20 includes a base cloth 13 and the light bead 1122 provided on the base cloth 13. The base cloth 13 is made of a flexible material. For example, the base cloth 13 can be a flexible cloth or a flexible substrate made of plastic, rubber, or silicone. The base cloth 13 can bend along with the shape of the light body 10 to be fitted and fixed on the outer surface of the light body 10. The hardness of the base cloth 13 can be greater than that of the light body 10 to effectively support and protect the light beads 1122.

The light body 10 is provided with an inflatable cavity 11 inside, and an inflation opening 12 in communication with the inflatable cavity 11 is provided on the light body 10. The inflation opening 12 is used to inflate the inflatable cavity 11 to make the light body 10 expand. The light body 10 includes a light-transmitting region and a soft light region.

The LED light source 20 is detachably provided on the outer surface of the light body 10 through the transition connector, and the transition connector of the LED light source 20 is provided in the light-transmitting region of the light body 10. The light-emitting surface of the LED light source 20 faces the soft light region of the light body 10.

In this embodiment, the light body 10 includes a light-transmitting sheet 1113 and a soft light cloth 14. The light-transmitting sheet 1113 corresponds to the light-transmitting region of the light body 10, and the soft light cloth 14 corresponds to the soft light region of the light body 10. The light-transmitting sheet 1113 and the soft light cloth 14 can form a cylindrical structure with openings at two ends and a hollow interior through ultrasonic pressing technology.

The light body 10 also includes two side cloths, namely a first side cloth 15 and a second side cloth 16. The first side cloth 15 and the second side cloth 16 are respectively connected to the openings at two ends of the cylindrical structure by ultrasonic pressing technology to enclose a cylindrical inflatable cavity 11. The light-transmitting sheet 1113 is made of rubber, silicone, or polyvinyl chloride. In addition, the light body 10 can be in a columnar, spherical, or annular structure after being inflated and expanded.

In other examples of this embodiment, the light-transmitting sheet 1113 and the soft light cloth 14 can also be connected by other means such as stitching, and the side cloths and the cylindrical structure formed by the light-transmitting sheet 1113 and the soft light cloth 14, which is not limited here.

For the light body 10 of this embodiment, the light-transmitting sheet 1113, the soft light cloth 14, the first side cloth 15, and the second side cloth 16 are connected to form the inflatable cavity 11 of the light body 10. The air can be inflated into the inflatable cavity 11 of the light body 10 through the inflation opening 12, making the light body 10 to expand into a cylindrical structure. After the air in the inflatable cavity 11 of the light body 10 is discharged, the light body 10 can be shrunk for easy storage of the entire inflatable cylindrical light 100.

In this embodiment, there are a plurality of light beads 1122 in the LED light source 20. The light beads 1122 in this embodiment can be LED lights, and the plurality of light beads 1122 are provided at intervals on the same base cloth 13. The base cloth 13 is provided on the light body 10 and is located on the outer surface of the light-transmitting sheet 1113 to realize the overall installation of the LED light source 20. The base cloth 13 can entirely cover the light-transmitting region of the light body 10 to effectively prevent light leakage of the inflatable cylindrical light 100, thus the inflatable cylindrical light 100 has a better lighting effect.

When the base cloth 13 is provided on the light body 10, the light-emitting surface of the light bead 1122 faces the surface of the light body 10. When the inflatable cylindrical light 100 is working, the light emitted by the LED light source 20 can pass through the light-transmitting sheet 1113 into the inflatable cavity 11 and then be emitted out from the soft light cloth 14.

In other examples of this embodiment, a plurality of LED light sources 20 can be provided. The base cloths 13 of the plurality of LED light sources 20 are all provided in the light-transmitting region of the light body 10 through one transition connector. The base cloths 13 of the a plurality of LED light sources 20 work together to fully cover the light-transmitting region of the light body 10 to effectively prevent light leakage of the inflatable cylindrical light 100, thus the inflatable cylindrical light 100 has a better lighting effect.

In this embodiment, the transition connector of the inflatable cylindrical light 100 is a Velcro 1130, which is provided on the outer surface of the light body 10. The Velcro 1130 is strip-shaped, and the length direction of the Velcro 1130 is consistent with the length direction of the light body 10. In this embodiment, there are two Velcros 1130, which are provided at intervals along the circumference of the inflatable cylindrical light 100.

The cross-section of the Velcro 1130 is a C-shaped structure, and the two Velcros 1130 are respectively fixed on two sides of the light-transmitting sheet 1113. The two side edges of the base cloth 13 of the LED light source 20 are provided in the opening of the C-shaped structure. The side of the base cloth 13 with the light beads 1122 faces the light-transmitting sheet 1113, that is, the light-emitting surface of the LED light source 20 faces the light-transmitting sheet 1113.

In this embodiment, the LED light source 20 is detachably provided on the outer surface of the light body 10 through the Velcro 1130. The installation and removal of the LED light source 20 on the light body 10 are very convenient. When the LED light source 20 is damaged, the entire damaged LED light source 20 can be directly removed from the light body 10, and another LED light source 20 can be directly installed on the light body 10 to ensure the normal use of the inflatable cylindrical light 100. In addition, since the LED light source 20 is detachable, the LED light sources 20 with different light colors and light effects can be replaced according to the user's needs, enriching the overall use effect of the inflatable cylindrical light 100 and improving the application scope of the inflatable cylindrical light 100.

In other examples of this embodiment, the transition connector can be a snap-fastener, and the LED light source 20 can be detachably provided on the light body 10 through the snap-fastener. The snap-fastener includes a male snap-fastener and a female snap-fastener that are snap-fitted. The male snap-fastener is provided on the outer surface of the light bead 1122, and the female snap-fastener is provided on the LED light source 20. The female snap-fastener is snapped to the male snap-fastener to detachably fix the LED light source 20 on the outer surface of the light body 10.

In addition, in another example of this embodiment, the transition connector of the inflatable cylindrical light 100 can include a zipper and a zipper head provided on the zipper. The zipper includes a first chain belt and a second chain belt that are meshed. The first chain belt is provided on the outer surface of the light body 10, and the second chain belt is provided on the LED light source 20. The zipper head meshes the first chain belt and the second chain belt to detachably fix the LED light source 20 on the outer surface of the light body 10.

The air opening of the inflatable cylindrical light 100 in this embodiment is provided on the first side cloth 15, and the inflatable cylindrical light 100 also includes an air nozzle 82. The air nozzle 82 is provided at the inflation opening 12 to open or close the inflation opening 12.

The air nozzle 82 includes an air nozzle body 821 and a knob plug 822 provided on the air nozzle body 821. The air nozzle body 821 has openings at two ends and a hollow interior, and passes through and is provided in the inflation opening 15 of the first side cloth 16, and its interior is in communication with the inflatable cavity 11 of the light body 10. The knob plug 822 is provided at an opening at an outer end of the air nozzle body 821 and can rotate relative to the air nozzle body 821 to be inserted into the opening of the air nozzle body 821 to close the inflation opening 12 or be detached from the opening of the air nozzle body 821 to open the inflation opening 12.

The inflation opening 12 can be opened through the knob plug 822. Different gases can be inflated into the inflatable cavity 11 of the light body 10 through the inflation opening 12 to meet the different lighting requirements of the inflatable cylindrical light 100, expanding the application scope of the inflatable cylindrical light 100.

In this embodiment, the inflatable cylindrical light 100 also includes a rubber pad 83. The rubber pad 83 is placed on the inner surface of the first side cloth 15 and surrounds the air nozzle body 821. The rubber pad 83 can be made of flexible materials such as thermoplastic polyurethane rubber or silicone to provide a protection on the inner surface of the first side cloth 15.

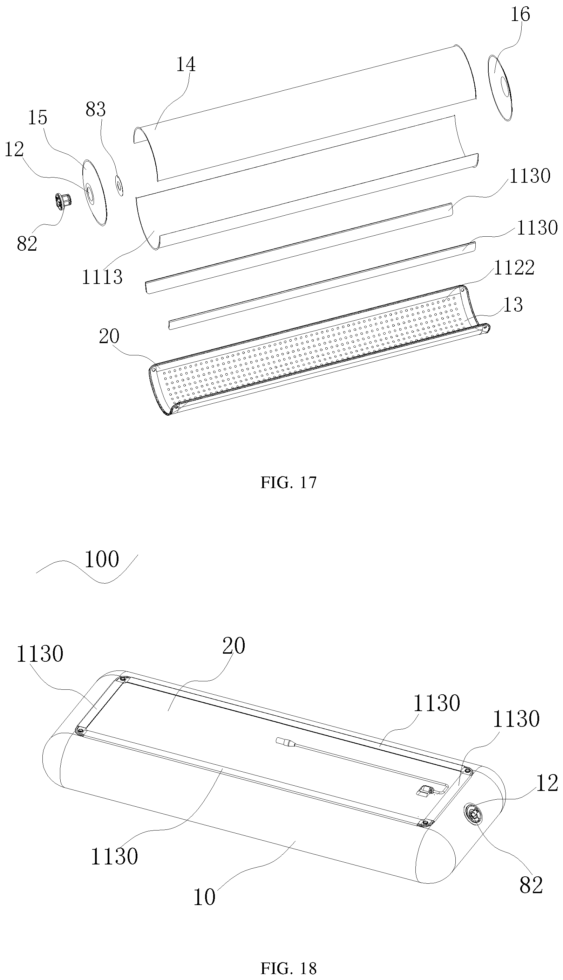

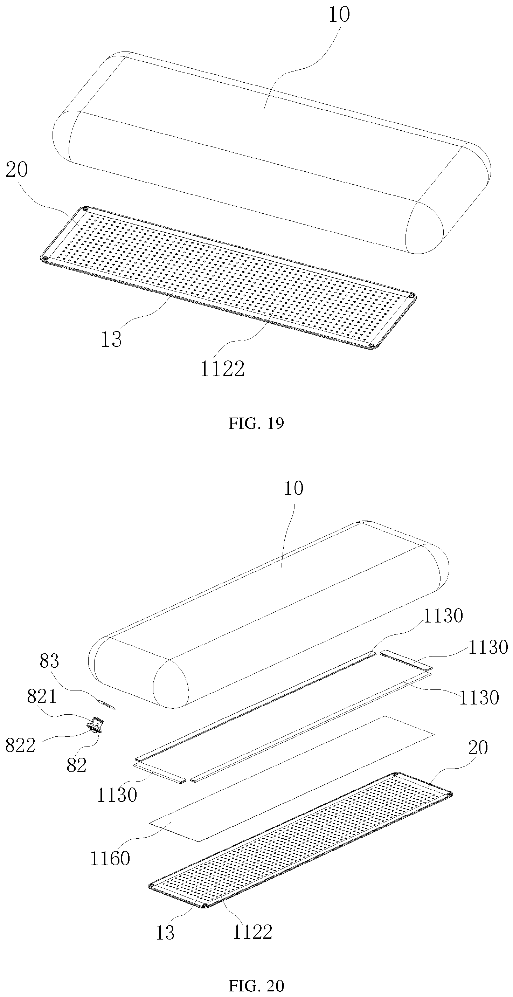

Referring to FIGS. 18 to 20, another embodiment of the present application provides an inflatable cylindrical light 100. The light body 10 of this inflatable cylindrical light 100 has a rectangular structure and can be directly replaced by a rectangular air cushion. The LED light source 20 is provided on the outer side surface of the light body 10, and the inflation opening 12 is provided at the end of the light body 10.

In this embodiment, the inflatable cylindrical light 100 further includes an air nozzle 82 provided at the inflation opening 12. The air nozzle 82 includes an air nozzle body 821 and a knob plug 822 provided on the air nozzle body 821. The air nozzle body 821 has openings at two ends and a hollow interior, and passes through and is provided in the inflation opening 12 at an end of light body 10, and its interior is in communication with the inflatable cavity 11 of the light body 10. The knob plug 822 is provided at an opening at an outer end of the air nozzle body 821 and can rotate relative to the air nozzle body 821 to be inserted into the opening of the air nozzle body 821 to close the inflation opening 12 or be detached from the opening of the air nozzle body 821 to open the inflation opening 12.

The inflation opening 12 can be opened through the knob plug 822. Different gases can be inflated into the inflatable cavity 11 of the light body 10 through the inflation opening 12 to meet the different lighting requirements of the inflatable cylindrical light 100, expanding the application scope of the inflatable cylindrical light 100.

In this embodiment, the inflatable cylindrical light 100 also includes a rubber pad 83. The rubber pad 83 is provided on the inner surface of the light body 10 and surrounds the air nozzle body 821. The rubber pad 83 can be made of flexible materials such as thermoplastic polyurethane rubber or silicone to form a protection on the inner surface of the light body 10.

The inflatable cylindrical light 100 in this embodiment also includes a Velcro 1130 and a light-transmitting film 1160. The Velcro 1130 is provided on the outer side surface of the light body 10. The Velcro 1130 is provided around the periphery of the LED light source 20 and the periphery of the light-transmitting film 1160 to detachably fix the LED light source 20 and the light-transmitting film 1160 on the outer side surface of the light body 10. The light-transmitting film 1160 can be made of materials such as rubber, silicone, or polyvinyl chloride. The light-transmitting film 1160 is placed between the LED light source 20 and the light body 10, and the light-emitting surface of the LED light source 20 faces the side surface of the light body 10.

For the inflatable cylindrical light of the present application, the LED light source is provided inside the light body. The light body can protect the LED light source, preventing the LED light source from being damaged, ensuring the normal operation of the LED light source, and ensuring a better user experience.

While the present application is described with reference to several exemplary embodiments, it should be understood that the terms used are illustrative and exemplary, not limiting. Since the invention can be practiced in a variety of forms without departing from the spirit or substance of the present application, it should be understood that the foregoing embodiments are not limited to any of the foregoing details but should be construed broadly within the spirit and scope of the accompanying claims, and therefore all variations and adaptations falling within the scope of the claims, or their equivalents, should be covered by the accompanying claims.

## Claims

1. An inflatable cylindrical light, **characterized by** comprising:
a light body, provided with a sealed inflatable cavity inside, wherein the light body is provided with an inflation opening in communication with the inflatable cavity, and the light body comprises a soft light cloth and an opaque base cloth; and
a Light Emitting Diode (LED) light source, provided inside the light body;
wherein a light-emitting surface of the LED light source faces the soft light cloth, and the light emitted by the LED light source is emitted from the soft light cloth through the inflatable cavity.

2. The inflatable cylindrical light according to claim 1, wherein the base cloth and the soft light cloth are connected to enclose a cylindrical structure with openings at two ends and a hollow interior;
wherein the light body further comprises two side cloths, respectively provided at the openings at two ends of the cylindrical structure to enclose the inflatable cavity of the light body.

3. The inflatable cylindrical light according to claim 2, further comprising a transparent fixing sheet, wherein the fixing sheet is attached to a surface of the LED light source to fix the LED light source inside the light body.

4. The inflatable cylindrical light according to claim 3, further comprising a connection plate, a first connection wire and a second connection wire;
wherein the connection plate is fixed on an inner wall of the light body;
a plurality of LED light sources are provided at intervals on an inner surface of the base cloth, and each LED light source is connected to the connection plate through the first connection wire; and
an end of the second connection wire is connected to the connection plate, and another end of the second connection wire is connected to a power supply.

5. The inflatable cylindrical light according to claim 4, further comprising a power port, provided on the side cloth, wherein the another end of the second connection wire is connected to the power supply through the power port.

6. The inflatable cylindrical light according to claim 4, further comprising a flexible member, provided on a surface of the connection plate to enable the connection plate to bend flexibly.

7. The inflatable cylindrical light according to claim 1, further comprising a Velcro and/or a magnet;
wherein the Velcro is provided on an outer surface of the base cloth, and the magnet is fixed on an inner wall of the base cloth.

8. The inflatable cylindrical light according to claim 1, wherein the soft light cloth and the base cloth are of a groove shaped structure;
an groove opening of the soft light cloth is opposite to an groove opening of the base cloth; and
a periphery of the groove opening of the soft light cloth is connected to a periphery of the groove opening of the base cloth to enclose the inflatable cavity of the light body.

9. The inflatable cylindrical light according to claim 8, wherein the light body is of a columnar structure, a ring-shaped structure, a spherical structure or an ellipsoidal structure.

10. The inflatable cylindrical light according to claim 1, further comprising an air nozzle, provided at the inflation opening to open or close the inflation opening.

11. The inflatable cylindrical light according to claim 1, further comprising a light-transmitting sheet;
wherein the light-transmitting sheet and the soft light cloth are connected to form the inflatable cavity;
the light-transmitting sheet corresponds to a light-transmitting region of the light body, and the soft light cloth corresponds to a soft light region of the light body; and
the LED light source is a light bead provided on the base cloth;
wherein the inflatable cylindrical light further comprises a transition connector, and a surface of the base cloth is detachably provided on a surface of the light-transmitting sheet through the transition connector.

12. The inflatable cylindrical light according to claim 11, wherein a plurality of light beads are provided on the base cloth; and
the base cloth covers the light-transmitting region of the light body through the transition connector.

13. The inflatable cylindrical light according to claim 11, wherein the transition connector is a Velcro provided on an outer surface of the light body; and
the base cloth of the LED light source is adhered to an outer surface of the light body through the Velcro.

14. The inflatable cylindrical light according to claim 11, wherein the light body further comprises two side cloths, respectively provided at two ends of an overall structure formed by connecting the light-transmitting sheet and the soft light cloth.

15. The inflatable cylindrical light according to claim 11, wherein a plurality of LED light sources are provided, and each LED light source is detachably provided on the light body through its own base cloth and the transition connector.

16. The inflatable cylindrical light according to claim 11, further comprising an air nozzle, provided at the inflation opening to open or close the inflation opening;
wherein the inflatable cylindrical light further comprises an annular rubber pad, provided on an inner surface of the light body and surrounding the air nozzle.

17. The inflatable cylindrical light according to claim 11, wherein the light body is of a rectangular structure; and the LED light source is provided on an outer side surface of the light body, and the inflation opening is provided at an end of the light body.

18. The inflatable cylindrical light according to claim 17, further comprising a Velcro and a light-transmitting film;
wherein the Velcro is provided on the outer side surface of the light body, and the Velcro is provided at a periphery of the LED light source and a periphery of the light-transmitting film to fix the LED light source and the light-transmitting film on the outer side surface of the light body; and
the light-transmitting film is provided between the LED light source and the light body.
